# EUROPÄISCHE PATENTSCHRIFT

(11) **EP 0 681 124 B1**
(45) Veröffentlichungstag und Bekanntmachung des Hinweises auf die Patenterteilung: **10.02.1999**
(21) Anmeldenummer: 95102684.8
(22) Anmeldetag: 24.02.1995
(51) Int. Cl.: F16H 61/26

(54) **Vorrichtung zum Dämpfen von Schwingungen in einer Getriebeschaltvorrichtung für Fahrzeuge**
Device for damping vibrations in a vehicular transmission gear change device
Dispositif amortisseur de vibrations dans un mécanisme de changement de vitesses d'une transmission de véhicule

(30) Priorität: 05.05.1994 DE 4415921
(43) Veröffentlichungstag der Anmeldung: 08.11.1995
(73) Patentinhaber: Bayerische Motoren Werke Aktiengesellschaft, 80788 München (DE)
(72) Erfinder: Weinhart, Armin, D-85560 Ebersberg (DE); Rastinger, Bernhard, D-81249 München (DE); Streng, Peter, D-81746 München (DE)

(56) Entgegenhaltungen:
- DE-A- 2 022 723
- DE-A- 3 634 174
- DE-A- 4 204 379
- DE-C- 3 916 569
- FR-A- 2 210 155

## Beschreibung

Die Erfindung bezieht sich auf eine Vorrichtung zum Dämpfen von Schwingungen in einer Getriebeschaltvorrichtung für Fahrzeuge nach dem Oberbegriff des Hauptanspruchs.

Durch motorerregte Schwingungen werden bei derartigen Getriebeschaltvorrichtungen Vibrationen über die äußere Schaltung, also insbesondere über die Schaltstange in den Gangschalthebel eingeleitet. Der hochfrequente Anteil dieser Schwingungen erzeugt beim Betätigen der Schaltung am Schalthebelknopf ein unangenehmes und störendes Schaltgefühl. Es hat sich gezeigt, daß hauptsächlich die Schwingungsanteile in Schalthebellängsrichtung die Vibrationen verursachen.

Die DE-A1-36 34 174 zeigt eine Vorrichtung zum Dämpfen derartiger Schwingungen. Die zwischen dem Gangschalthebel und dem Getriebe liegende Schaltstange ist bei der bekannten Vorrichtung durch eine Art Kreuzgelenk zweigeteilt. Die beiden Stangenabschnitte sind dabei durch das Gelenk so miteinander verbunden, daß die Schaltstange Dreh- und Axialbewegungen ausführen kann. Um die radial zur Längsachse der Schaltstange auftretenden, vom Motor-Getriebe-Block herrührenden Schwingungen zu dämpfen bzw. abzukoppeln, sind an jedem Stangenabschnitt Federelemente, vorzugsweise O-Ringe vorgesehen. Die Federelemente werden durch ein steifes Verbindungsglied umschlossen, das selbst wiederum von den Schaltstangenabschnitten getrennt ist.

Aus der DE-A1-42 04 379 läßt sich ebenfalls eine zweigeteilte Schaltstange entnehmen, bei der ein U-förmiges Teil die beiden Enden der Schaltstange verbindet. Das Ende des einen Schaltstangenabschnittes ist mit einem Bolzen an dem U-förmigen Teil befestigt, am Ende des anderen Schaltstangenabschnittes ist ein Steg vorgesehen, der wiederum über ein Elastomer mit dem U-förmigen Teil verbunden ist.

Der Aufbau der vorbekannten Vorrichtungen ist verhältnismäßig aufwendig und es ist Aufgabe der Erfindung, eine gattungsgemäße Vorrichtung in einfacherer Weise darzustellen.

Die Aufgabe wird erfindungsgemäß gelöst mit den kennzeichnenden Merkmalen des Hauptanspruchs. Vorteilhafte Ausgestaltungen der Erfindung ergeben sich aus den Unteransprüchen.

Die Erfindung verwendet gegenüber dem Stand der Technik lediglich ein Drehgelenk, dem ein Stützlager zugeordnet ist. Dabei lassen sich Drehgelenk und Stützlager in einfacher Weise durch Bolzen und Hülsen aufbauen, die an den jeweiligen Stangenabschnitten beispielsweise durch Schweißen befestigt sind.

Wie bereits erwähnt, wirken sich insbesondere mehrachsig eingeleitete Schwingungen am Schalthebel störend aus. Entsprechend vermag die geteilte Schaltstange nach der erfindungsgemäßen Vorrichtung bevorzugt diese Schwingungsanteile zu dämpfen. Wird neben dem Stützlager auch beim Drehgelenk ein gewisses Spiel zugelassen, ist es möglich, den hierzu senkrecht auftretenden Schwingungsanteil ebenfalls bis zu einem gewissen Grad zu dämpfen. In diesem Fall aber wird die Schaltung ein etwas weicheres, teigiges Schaltgefühl zeigen.

Um Geräuschprobleme zu vermeiden, ist es weiter vorteilhaft, den durch das Spiel gebildete Freiraum wenigstens teilweise mit einer elastischen Schicht auszufüllen. Die Elastizität der Schicht verbessert darüber hinaus die Dämpfung der Schwingungen.

Insgesamt vermittelt die erfindungsgemäße Vorrichtung ein exaktes Schaltgefühl und unterbindet weitgehend das störende Vibrieren des Schalthebels.

Weitere vorteilhafte Ausgestaltungen der Erfindung ergeben sich aus der nachfolgenden Beschreibung eines Ausführungsbeispiels anhand der dazugehörigen Zeichnung. Es zeigen
- Figur 1: eine erfindungsgemäße Vorrichtung umfassend einen Gangschalthebel, eine Schaltstange und ein angedeutetes Getriebegehäuses und
- Figur 2: die Schaltstange nach Figur 1 in der Draufsicht.

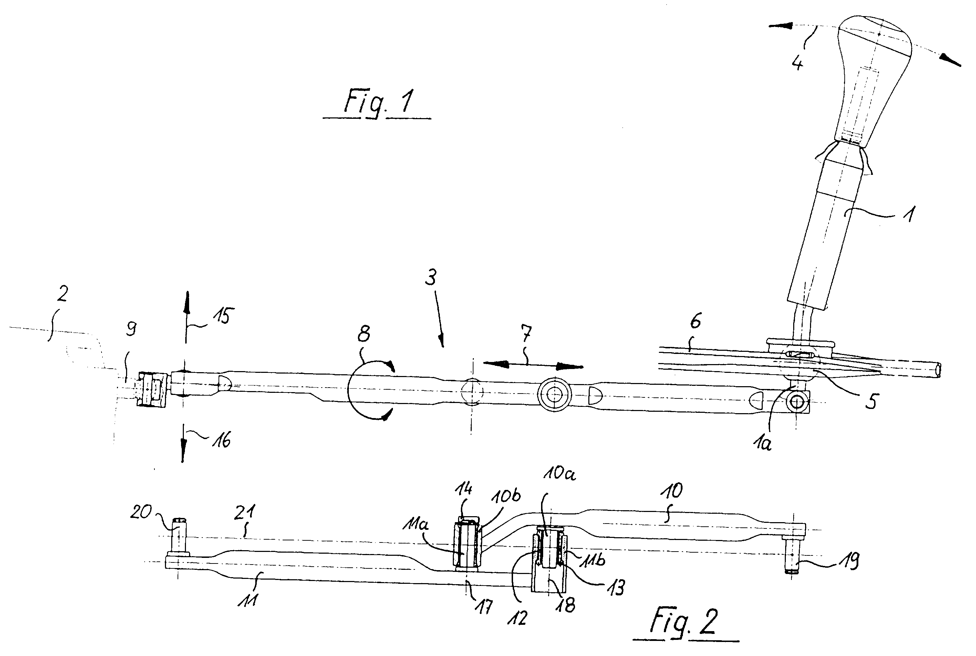

Die erfindungsgemäße Vorrichtung für ein Fahrzeug besteht aus einem Schalthebel 1, einem Schaltgetriebe 2 und einer zwischen dem Schalthebel 1 und dem Schaltgetriebe 2 liegenden, insgesamt mit 3 bezeichneten Schaltstange. Der Schalthebel 1 läßt sich in Richtung eines Doppelpfeiles 4 in Fahrtrichtung nach vorne und nach hinten bewegen. Desweiteren kann er senkrecht dazu betätigt werden, was allerdings in der Figur 1 nicht dargestellt ist. Ermöglicht wird diese Beweglichkeit des Schalthebels 1 durch eine Kugellagerung 5 in dem Bodenabschnitt 6 einer nicht näher dargestellten Fahrzeugkarosserie.

Ein unteres Ende 1a des Schalthebels 1 ist gelenkig mit der Schaltstange 3 verbunden, so daß die Schaltstange 3 die Bewegungen des Schalthebels 1 mitmacht, das heißt, daß sie sich axial verschieben und um ihre Achse verdrehen läßt. Die axialen Bewegungen sind in Figur 1 durch einen Doppelpfeil 7, die Verdrehbarkeit durch einen Doppelpfeil 8 dargestellt.

Das dem Schalthebel 1 gegenüberliegende Ende der Schaltstange 3 ist wiederum gelenkig mit einem Schaltglied 9 verbunden, das in das Innere des Getriebes führt und im wesentlichen die nicht weiter dargestellten Schaltgabeln betätigt und damit das Einlegen der Gänge bewirkt.

Der Aufbau der Schaltstange 3 ist in Figur 2 näher dargestellt. Sie besteht aus zwei Stangenabschnitten 10 und 11, die mit ihren einen Enden miteinander verbunden sind, während die anderen Enden Zapfen 19 und 20 aufweisen für den jeweiligen gelenkigen Anschluß des Schalthebelendes 1a bzw. des Schaltgliedes 9.

Desweiteren ist an jedem Stangenabschnitt 10, 11 eine Hülse und ein Bolzen befestigt, und zwar im Bereich des Endes, das mit dem anderen Stangenabschnitt in Verbindung steht. Dabei sind in Axialrichtung am äußeren Ende die Hülsen und mit Abstand hierzu die Bolzen angeordnet. Beide Teile, also Bolzen und Hülsen stehen zur Stangenachse radial ab und zeigen in die gleiche Richtung. Ihre Längsachsen verlaufen somit parallel zueinander. Im Fall des Stangenabschnitts 10 ist die am äußeren Ende sich befindliche Hülse mit der Kennziffer 10b belegt, während der Bolzen die Bezugsziffer 10a trägt. Entsprechend ist bei der Stangenhälfte 11 der Bolzen mit 11a bezeichnet und die Hülse mit 11b.

Die Stangenabschnitte 10 und 11 sind zusammengesteckt und ergeben so die Schaltstange. Dabei bilden die Hülse 10b und der Bolzen 11a ein Drehgelenk mit einer senkrecht zur Längsachsen der Stangenabschnitt verlaufenden Drehachse 17. Die Hülse 11b und der Bolzen 10a andererseits bilden zusammen ein Widerlager, dessen Lagerachse 18 ebenfalls senkrecht zu den Schaltstangenachsen und parallel zur Drehgelenkachse 17 verläuft.

Zwischen dem Bolzen 10a und der Hülse 11b ist Spiel vorgesehen. Einen Teil des durch das Spiel sich einstellenden Freiraum füllt eine elastische Schicht 12 aus, die als Manschette den Bolzen 10a umgibt. Elastische O-Ringe 13 sichern die Manschette in axialer Richtung. Es sei noch angemerkt, daß die elastische Schicht 12 den Freiraum ganz ausfüllen kann.

Ein Federclips 14, der in eine Ringnut des aus der Hülse 10b heraustretenden Ende des Bolzens 11a aufgeschoben ist, sichert die beiden Stangenhälften 11 und 10 in ihrer montierten Lage.

Der Stangenabschnitt 10 ist an seinem dem Stangenabschnitt 11 zugewandten Ende gekröpft, so daß die eigentlichen Längsachsen der Stangenabschnitte 10, 11 im Abstand zueinander parallel verlaufen. Die Anschlußzapfen 19, 20 für die schalthebel- und getriebeseitige Anlenkung zeigen in entgegengesetzten Richtungen, so daß sich die zusammengesetzte Schaltstange so ins Fahrzeug einbauen läßt, daß ihre gedachte Längsachse 21 sowohl durch die Mitte der schalthebel- und getriebeseitigen Gelenke als auch durch die Mitte des Drehgelenks und des Stützlagers verläuft. Eine Verschränkung der Schaltstange bei ihrer Betätigung wird dadurch vermieden.

Die Schaltstange, bestehend aus den Schaltstangenabschnitten 10 und 11 ermöglicht es, Schwingungen, wie sie in Figur 1 mit den Pfeilen 15 und 16 dargestellt sind, wirksam zu dämpfen und damit vom Schalthebel 1 fernzuhalten. Durch das Spiel in dem Stützlager 13 läßt sich der Stangenabschnitt 11 in einem begrenzten Bereich in Richtung der Pfeile 15, 16 bewegen und wird in seiner Bewegung durch die Zwischenlage 12 gedämpft. Durch das Drehgelenk 11a, 10b andererseits lassen sich Bewegungen in Richtung des Doppelpfeiles 7 und des Pfeiles 8 ohne Spiel auf das Getriebeeingangsteil 9 übertragen. Bei diesen Bewegungen verhindert das Stützlager 10a, 11b ein Ausknicken der beiden Stangenhälften 10 und 11.

## Patentansprüche

1. Vorrichtung zum Dämpfen von Schwingungen in einer Getriebeschaltvorrichtung für Fahrzeuge,
- mit einer im Fahrzeug drehbar und axial beweglich angeordneten Schaltstange (3), die mit einem von Hand betätigbaren Schalthebel (1) verstellbar ist und in axialer Richtung wenigstens zwei Stangenabschnitte (10, 11) umfaßt,
- die Stangenabschnitte (10, 11) sind über ein Dreh- und Axialbewegungen der Schaltstange ermöglichendes Drehgelenk miteinander verbunden, das eine senkrecht zur Achsrichtung der Schaltstange (3) verlaufende Drehachse (17) aufweist,
- zusätzlich sind die beiden Stangenabschnitte (10, 11) über ein spielbehaftetes Stützlager miteinander verbunden,
- die Lagerachse (18) des Stützlagers verläuft parallel zur Drehachse (17) des Drehgelenks,
- an den Stangenabschnitten (10, 11) sind - radial in gleicher Richtung verlaufend und axial beabstandet voneinander - Hülsen (10b, 11b) und Bolzen (10a, 11a) vorgesehen, die ineinander greifend das Drehgelenk und das Stützlager ausbilden.

2. Vorrichtung nach Anspruch 1, dadurch gekennzeichnet, daß die Hülse (10b) des einen Stangenabschnitts (10) zusammen mit dem Bolzen (11a) des anderen Stangenabschnittes (11) das Drehgelenk und der Bolzen (10a) des einen Stangenabschnitts (10) mit der Hülse (11b) des anderen Stangenabschnitts (11) das Stützlager bilden.

3. Vorrichtung nach Anspruch 2, dadurch gekennzeichnet, daß zwischen dem Bolzen (10a) des Stützlagers und der zugeordneten Hülse (11b) eine elastische Zwischenschicht (12) vorgesehen ist.

## Claims

1. A device for damping vibration in a gear-shift system for vehicles,
- comprising a shift rod (3) which is mounted so as to be rotatable and axially movable in the vehicle, is adjustable by a hand-operated shift lever (1) and has at least two portions (10, 11) in the axial direction,
- the rod portions (10, 11) are connected to one another by a swivel joint which allows the shift rod to rotate and move axially, the axis (17) of the joint extending at right angles to the axis of the shift rod (3),
- in addition the two rod portions (10, 11) are connected to one another by a step bearing with clearance,
- the axis (18) of the step bearing is parallel to the axis of rotation (17) of the swivel joint, and
- sleeves (10b, 11b) and bolts (10a, 11a) axially spaced apart and extending radially in the same direction are provided on the rod portions (10, 11) and interlock to form the swivel joint and the step bearing.

2. A device according to claim 1, characterised in that the sleeve (10b) of one rod portion (10) and the bolt (11a) of the other rod portion (11) form the swivel joint and the bolt (10a) of one rod portion (10) and the sleeve (11b) of the other rod portion (11) form the step bearing.

3. A device according to claim 2, characterised in that an elastic layer (12) is provided between the bolt (10a) of the step bearing and the associated sleeve (11b).

## Revendications

1. Dispositif amortisseur des vibrations d'un changement de vitesses de véhicule automobile comprenant :
- une tige de commutation (3) équipant le véhicule et mobile en rotation et axialement, cette tige étant réglable à l'aide d'un levier de commutation (1) actionné à la main et comprenant dans la direction axiale, au moins deux segments de tige,
- les segments de tige (10, 11) sont reliés l'un à l'autre par une articulation de rotation permettant les mouvements de rotation et les mouvements axiaux de la tige de changement de vitesses, cette articulation comportant un axe de rotation (17) perpendiculaire à la direction axiale de la tige de commutation (3),
- en plus, les deux segments de tige (10, 11) sont reliés l'un à l'autre par un palier d'appui avec du jeu,
- l'axe de palier (18) du palier d'appui est parallèle à l'axe de rotation (17) de l'articulation de rotation,
- les segments de tige (10, 11) comportent (radialement dans la même direction et écartés axialement) des manchons (10b, 11b) et des goujons (10a, 11a) formant par interaction, l'articulation de rotation et le palier d'appui.

2. Dispositif selon la revendication 1,
caractérisé en ce que
le manchon (10b) d'un segment de tige (10) forme l'articulation de rotation avec le goujon (11a) de l'autre segment de tige (11), et le goujon (10a) d'un segment de tige (10) forme le palier d'appui avec le manchon (11b) de l'autre segment de tige (11).

3. Dispositif selon la revendication 2,
caractérisé par
une couche intermédiaire élastique (12) entre le goujon (10a) de l'appui et le manchon associé (11b).
